# EUROPEAN PATENT APPLICATION

(11) **EP 1 586 984 A2**
(43) Date of publication of application: **19.10.2005**
(21) Application number: 05008184.3
(22) Date of filing: 14.04.2005
(51) Int. Cl.: G06F 3/033, G06F 9/44, G06F 17/24

(54) **Aiding value input**

(30) Priority: 16.04.2004 US 563038 P; 23.09.2004 US 948369
(71) Applicant: SAP AG, 69190 Walldorf (DE)
(72) Inventor: Albrecht, Christoph, 69190 Walldorf (DE); Guder, Heike, 69190 Walldorf (DE); Gross, Andreas, 69115 Heidelberg (DE)
(74) Representative: Müller-Boré & Partner Patentanwälte

(57) **Abstract**

A method of aiding a user of a graphical user interface (GUI) in inputting a value includes displaying a first GUI abstraction in a GUI. The first GUI abstraction presents a first collection of possible values for an input field. A user input is received, indicating that the user wants to choose from another collection of possible values different from the first collection. The user input is made in a specific context. A second GUI abstraction is displayed that presents the other collection of possible values. The second GUI abstraction is selected based on the specific context. The first GUI abstraction may be a drop down list box. The second GUI abstraction may be a pane presenting the other collection of possible values.

## Description

### CROSS-REFERENCE TO RELATED APPLICATION

This application claims the benefit of U.S. Provisional Patent Application Serial No. 60/563,038, filed on April 16, 2004, the contents of which are incorporated by reference into this document.

### TECHNICAL FIELD

This description relates to aiding a user in inputting a value in an input field.

### BACKGROUND

Many computer systems and software applications provide user interaction through one or more input fields. Typically, the input field can be displayed in a graphical user interface (GUI) that can be presented on a display device. In some systems, a large number of possible values can be input in the input field, and it may be difficult or impossible for the average user to remember all the different alternatives. This may cause problems or delay if the user mistakenly enters the wrong value in the input field or if it takes significant time for the user to look up the correct value before entering it.

One approach at addressing this type of situation is the Value Help function provided in some products available from SAP AG in Walldorf (Baden), Germany. Value Help can be opened as a separate window in the GUI, either by clicking a graphic icon or by hitting the F4 key on the computer keyboard. For example, the Value Help may present a list of possible values for the user to choose between. Value Help may include features for sorting, filtering and searching the list.

### SUMMARY

The invention relates to aiding a user in inputting a value in an input field.

In a first aspect, a method of aiding a user of a GUI in inputting a value comprises displaying a first GUI abstraction in a GUI, the first GUI abstraction presenting a first collection of possible values for an input field. A user input is received indicating that the user wants to choose from another collection of possible values different from the first collection. The user input is made in a specific context. The method comprises displaying a second GUI abstraction presenting the other collection of possible values, the second GUI abstraction being selected based on the specific context.

In selected embodiments, the first GUI abstraction may be a drop down list box. In selected embodiments, the second GUI abstraction may be a pane presenting the other collection of possible values.

In selected embodiments, the specific context is a setting specifying that the input field accepts entries containing more than one of the possible values. In selected embodiments, the specific context is a value type to which the possible values belong. In selected embodiments, the specific context is a characteristic of retrieving the other collection of the possible values for display.

In a second aspect, a method of aiding a user of a GUI in inputting a value comprises displaying a drop down list box in a GUI, the drop down list box presenting a first collection of possible values for an input field. A user input is received indicating that the user wants to choose from another collection of possible values different from the first collection, the user input being made in a specific context. The method comprises displaying a pane presenting the other collection of possible values, the pane including a tool for choosing from the other collection of possible values. The tool is selected based on the specific context.

Advantages of the system and techniques described herein may include any or all of the following. Providing a more user-friendly GUI; simplifying use of an input field that has a large number of possible input values; providing an improved presentation of possible values for an input field; providing improved personalization of a GUI; improving usability in making complex value selections; and providing an improved GUI control.

The details of one or more embodiments of the invention are set forth in the accompanying drawings and the description below. Other features, objects, and advantages of the invention will be apparent from the description and drawings, and from the claims.

### BRIEF DESCRIPTION OF THE DRAWINGS

Figures 1A and 1B are examples of a GUI abstraction;
Figures 2A-2F are additional examples of GUI abstractions;
Figure 3 is another example of a GUI abstraction;
Figures 4 and 5 are flow charts of methods of aiding a user in inputting a value; and
Figure 6 is a block diagram of a general computer system.

Like reference numerals in the various drawings indicate like elements.

### DETAILED DESCRIPTION

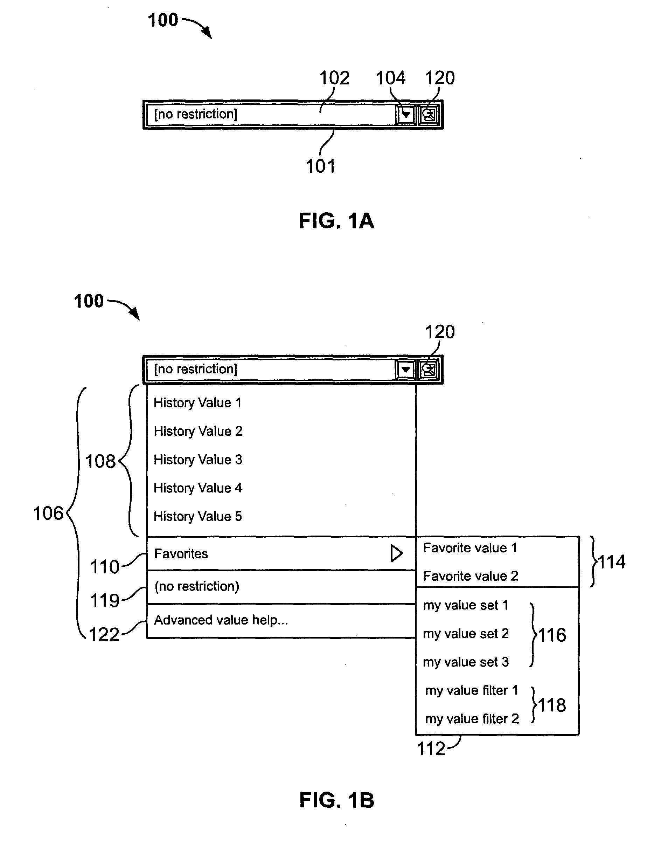

Figure 1A shows a first GUI abstraction 100 that presents a first collection of possible values for an input field. That is, the input field may be defined to accept one or more entries as valid inputs, and those entries are here referred to as possible values. The user can choose one or more of the first collection of possible values and make an input with the first GUI abstraction. If the user wants to choose from a different collection of possible input-field values, the user can make an input the system will display and a second GUI abstraction that presents the other collection of possible values. The second GUI abstraction is selected based on a specific context in which the user input is made.

Here, the first GUI abstraction is implemented as a GUI control that encapsulates a drop down list box 101. A computer system may present the control on a display device for a user to choose from the possible values for making an input into the system. For example, the user can use an input device to type at least one of the possible values in a field 102. As another example, the user can click a button 104 to cause the system to display a list of the first collection of possible values.

Figure 1B shows the first GUI abstraction 100 with its list 106 being displayed upon the user clicking the button 104. The list may include one or more user-selectable history values 108, which are values that the user previously has entered in the field 102. For example, the history values are the five most recently entered values.

The list 106 may include a favorites menu 110. Selecting the favorites menu causes a sub-list 112 to be displayed. The sub-list may include one or more user-defined favorite values 114, each of which corresponds to a specific value among the possible values for the input field. When the input field accepts entries containing more than one of the possible values, the sub-list may include one or more user-defined value sets 116, each set corresponding to more than one specific value among the possible values for the input field. The sub-list may include one or more user-defined value filter entries 118, each of which corresponds to a query to be performed on the possible values for the input field. Upon selecting one of the entries 118, the query is performed and a query result may be entered in the field 102.

The list 106 may include a user-selectable "(no restriction)" entry 119 that corresponds to not selecting a specific value for the input field. This entry is the default entry in the shown example. For example, the first GUI abstraction 100 can be one of several alternatives available to the user in the GUI and the user may choose not to make an entry in the present field.

The first GUI abstraction 100 may include a value help control 120 that the user can activate if the user wants to choose from another collection of possible values that is different from the first collection presented by the first GUI abstraction. Activating the control 120 causes a user input that triggers the system to display a second GUI abstraction that presents the other collection of possible values. For example, as described above the first collection may be a limited group of the possible values for the input field. The second collection, in turn, may be a larger group including the limited group. That is, the other collection of possible values may include the first collection of possible values and at least another of the possible values. The list 106 may include an "Advanced value help" entry 122 with the same function as the control 120. Thus, the user input requesting the second GUI abstraction can be made in either the Figure 1A or Figure 1B situation.

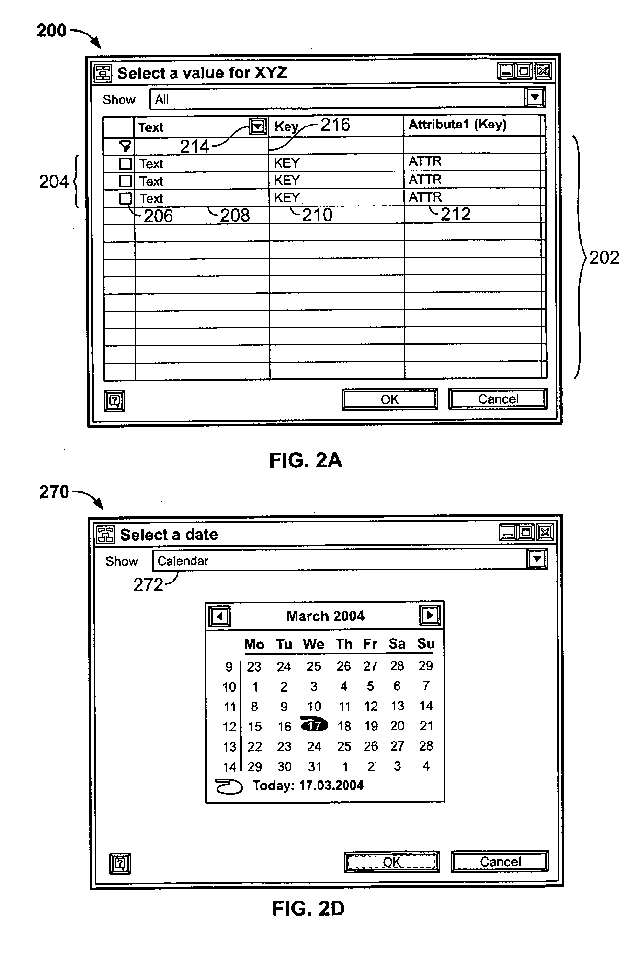

The second GUI abstraction is selected based on a context in which the user input is made. Figures 2A-2F show examples of second GUI abstractions that can be selected. Accordingly, upon receiving the user input the system may determine the specific context in which the input is made and select one of the second GUI abstractions based on that context. Moreover, selecting the second GUI abstraction based on the context may involve selecting a tool for the second GUI abstraction based on the context.

In Figure 2A, the second GUI abstraction is an "all" pane 200 that presents all of the other collection of possible values in a list 202. In this example, the other collection includes possible values 204, each of which may include a selection icon 206, a text component 208, a key component 210 and an attribute component 212. The combination of text, key and attribute columns is only an example and can be changed by a system administrator or by the user. Here only three values are shown but in other implementations the list may include hundreds or thousands of possible values or more.

The "all" pane 200 may provide sorting or filtering of the other collection of possible values. For example, if the user clicks on a button 214 the possible values are sorted by their components in a column below the button. As another example, if the user enters a character string in an area 216 that is above one of the columns of value components, the possible values that do not include the character string in that component are filtered out and not displayed in the pane. Accordingly, the "all" pane lets the user choose from the other collection of possible values, which may include the entire group of values that can validly be entered in the input field, and enter a value by clicking its selection icon 206.

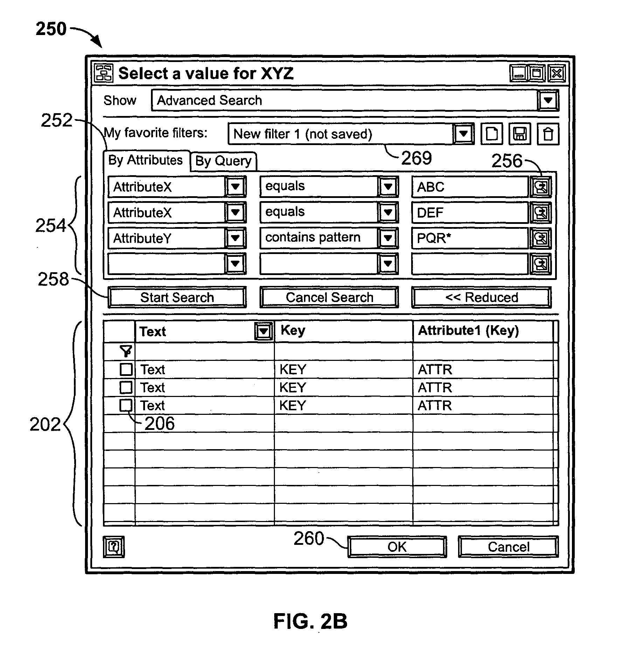

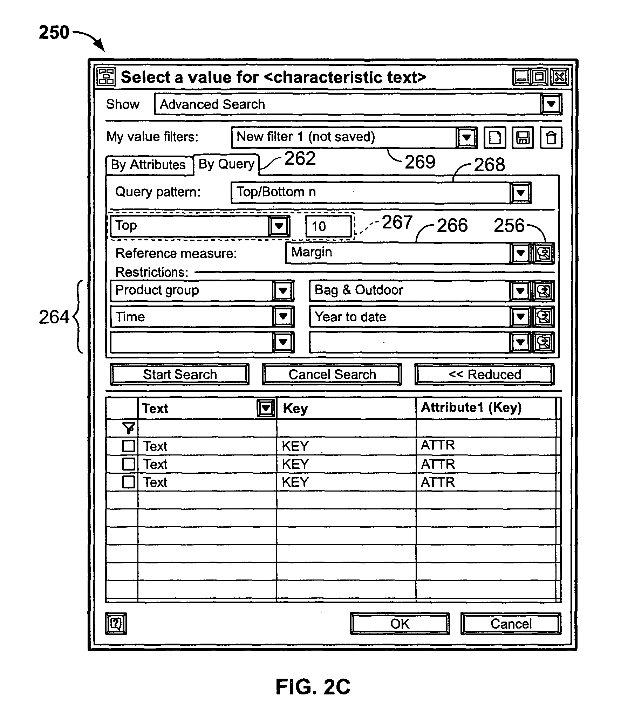

In Figures 2B and 2C, the second GUI abstraction is a "search" pane 250 that lets the user run a search among the other collection of possible values. For example, a tab 252 on the pane indicates that the search can be performed by attributes. The pane may include a search formulation area 254 in which the user can define the search in an "attribute―operator―criterion" format. For example, the current search includes the formulation "Attribute X equals ABC". Other examples of operators are "less than," "greater than or equal to" and "contains substring".

The field containing the criterion ABC is provided with a value help control 256 that provides help with choosing from the values that can be entered in this field (i.e., the different attribute values in this example). This is analogous to the situation described above with reference to Figures 1A and 1B, where the user selects the value help control 120 (or the entry 122) for assistance with entering a value in the field 102, in that with the control 256 the user seeks assistance with entering a criterion for searching for a value to be entered in the field 102.

The user may initiate performance of the formulated search with a start search button 258. A search result may include one or more values and may be displayed in the list 202 similarly to the "all" pane 200. For example, the user may choose one value among the results by clicking its selection icon 206. The pane 250 may be closed, and the selected value entered in the field 102, upon the user clicking an OK button 260.

As shown in Figure 2C the search can be performed by query upon the user selecting a tab 262 on the pane 250. The query can be specified in a restriction area 264 and a measure field 266. A filter field 267 lets the user restrict presentation of the results, for example to the top 10 number of found values. The fields in the area 264 and the measure field 266 have the value help control 256 by which the user can identify suitable entries for each of these fields. For example, the currently displayed query seeks the top ten products by profit margin, and the restrictions entered in the area 264 specify that the search is limited to products belonging to a product group "Bag & Outdoor" and within a time frame "Year to date."

The particular combination of the area 264, the field 266 and the filter field 267 is one of several patterns for formulating the query. Other patterns can be selected using a pattern field 268. For example, the current query pattern is "Top/Bottom n," which corresponds to selecting a specified number of items from either the top or bottom of some listing of the items. Moreover, the user can save the particular entries of the area 264 and the fields 266, 267 and 268 using a filter definition field 269. For example, any or all of the value filter entries 118 (see Figure 1) can be defined using the field 269. One advantage of defining a query for entering values in the field is that the query, unlike the value sets 116, can yield different results at a later time.

The search pane 250 is particularly useful when there is a large number of possible values for the input field, because it has an advanced search function that lets the user restrict the number of presented values for an easier selection. The all pane 200, in comparison, may make the user's selection easier when the number of the possible values is such that all of them can be retrieved from the system and presented to the user without significant delay. These or other characteristics of retrieving the collection of possible values for display may be the specific context in which the user makes the input to trigger display of the second GUI abstraction. Accordingly, the system may monitor such characteristics as a basis for selecting the second GUI abstraction. For example, if the other collection of possible values does not exceed a pre-selected maximum number or if the other collection can be retrieved for display within a pre-selected maximum time, or both, the system may select the all pane 200 as the second GUI abstraction. As another example, if the other collection of possible values does exceed a pre-selected maximum number or if the other collection cannot be retrieved for display within a pre-selected maximum time, or both, the system may select the search pane 250 as the second GUI abstraction.

The specific context may be the type(s) of values to which the collection of possible values belongs. That is, the second GUI abstraction can be selected based on a value type. For example, when the value type includes dates, the second GUI abstraction can include a calendar tool 270 as shown in Figure 2D. The tool may display one month at a time and let the user select one or more dates in the current month or scroll to another month. A view selection field 272 may include the currently shown calendar tool as a default entry. Other possible selections in the field 272 include "all system dates," "history of system dates" and "favorite system dates," which offer the user additional ways of selecting one or more dates for the input field.

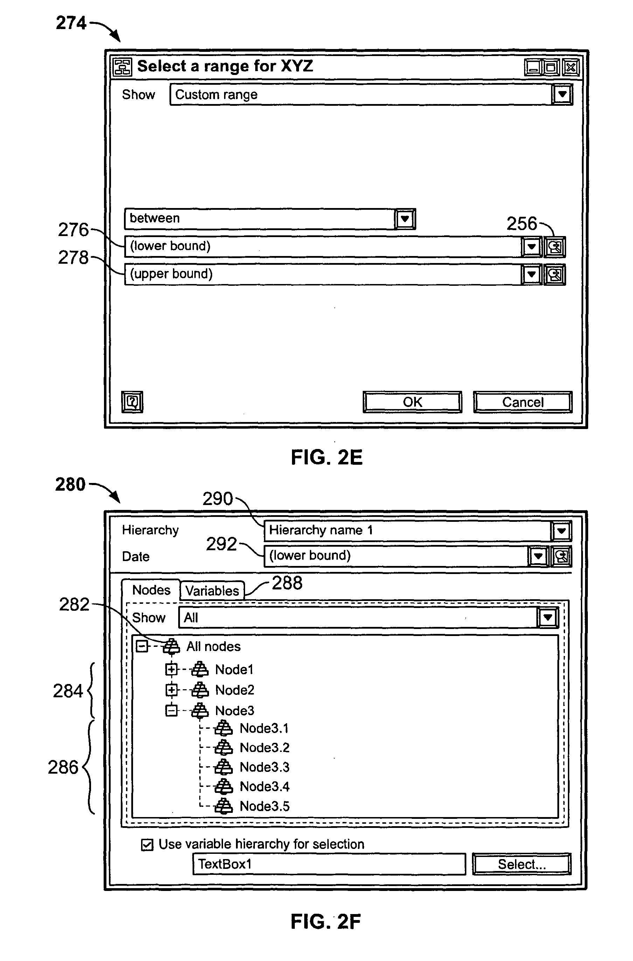

As another example, the value type may be such that a range can be defined among the possible values. The second GUI abstraction then may include a range definition tool 274 as shown in Figure 2E. Here, the user can enter a lower range limit using a field 276 and an upper range limit using a field 278. Each of the fields 276 and 278 is provided with the value help control 256 that can be used in identifying entries for the respective field.

The value type(s) for the possible values may include a hierarchy, for example a product hierarchy or an organization hierarchy. The second GUI abstraction then may include a hierarchy selection definition tool 280 as shown in Figure 2F. Here, the user can choose any of a root node 282, first level nodes 284, or second level nodes 286. A variables tab 288 lets the user display a table of all node variables, such as text, key and attributes. The specific context in which the user input is made may uniquely define the relevant hierarchy to be displayed in the tool 280. Otherwise, the user may choose from several hierarchies listed in a hierarchy selection field 290. With time dependent hierarchies, the user can enter a date for the hierarchy in date selection field 292.

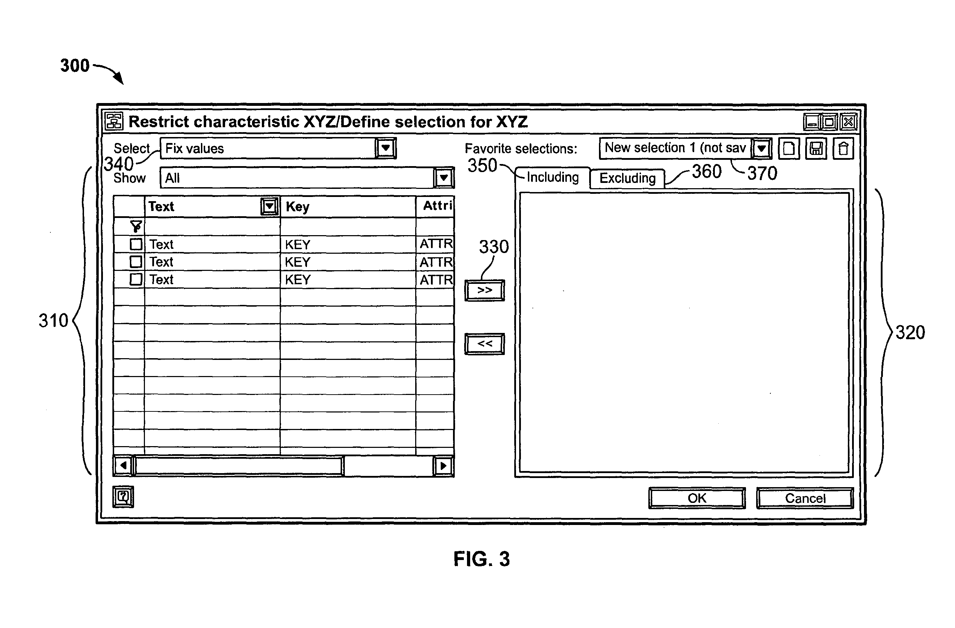

Figure 3 shows another example of a second GUI abstraction that includes a "multiple-value" pane 300. The pane has a tool area 310 in which can be displayed a tool for presenting at least part of the collection of possible values. The pane has a selection area 320 which can list one or more values that the user has selected in the tool area using a control 330. Any tool described herein may be presented in the tool area, for example any or all of the panes 200, 250, 270, 274 and 280. The system may select the tool based on the specific context in which the user makes an input to see the second GUI abstraction.

When the pane 300 is being displayed, the user can choose a different tool using a tool selection field 340. Upon receiving an input made with the field 340, the system may display the selected tool in the tool area 310. The system may allow user extensions of the existing tool family. Upon an additional tool being provided it may be added to the field 340.

A currently selected "Including" tab 350 indicates that the user is choosing the value(s) listed in the selection area 320 to be entered in the field 102. In contrast, an "Excluding" tab 360 indicates that the user is choosing every value listed in the tool area 310 except the values listed in the selection area 320 to be entered in the field 102. A favorite definition field 370 lets the user save the current entries of the pane 300. For example, any or all of the value sets 116 (see Figure 1) can be defined using the field 370.

The pane 300 lets the user select more than one value for the input field. The system may have a setting that defines whether the input field accepts entries containing more than one of the possible values. That setting may be the specific context in which the user input is made and, accordingly, the pane 300 may be selected based on such a context.

The first and second GUI abstractions may be encapsulated in a GUI control. That is, the functionality of the drop down list box and the selectively displayable search pane, to name two examples, can be included in a single control. This simplifies development and may offer a more convenient way of providing favorites and history management regarding an input field. For example, the functionality that such a control exposes to the user can be automatically configured by the system based on the type of the input field with which it is being used. In another example, a user may implement the control in a manually designed screen and configure its functionality by specifically setting the exposed properties of the control, such as choosing the pane 200 for the second GUI abstraction or deciding that only the panes 200 and 250 will be available in field 340 for presentation in the tool area 310. Because the control can encapsulate multiple different features, for example all the functionality described above, it provides a flexible control that can be used in many different scenarios.

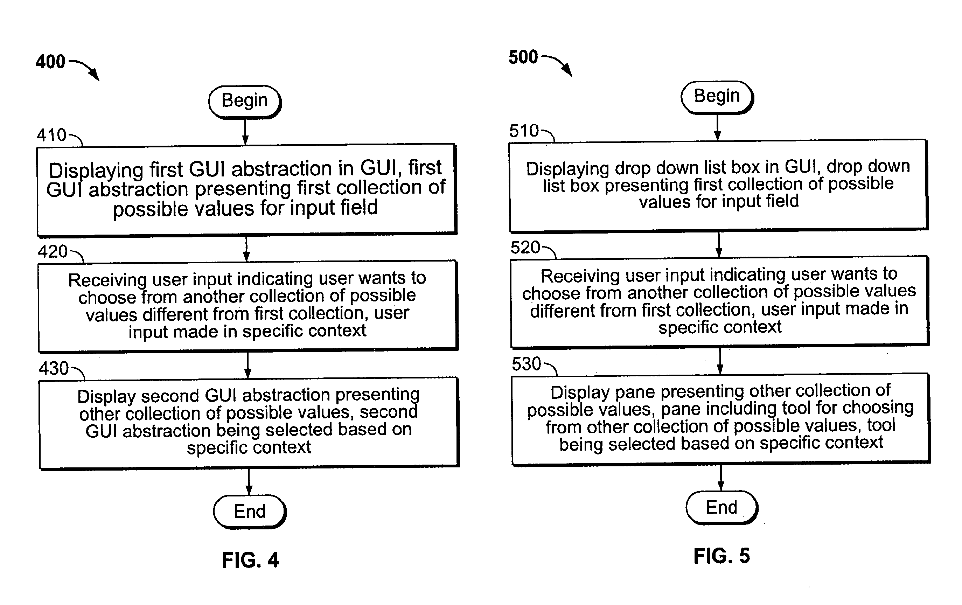

Figure 4 is a flow chart of a method 400 according to one embodiment of the invention. For example, a computer program product can include instructions that cause a processor to perform the steps of the method 400. The method includes the following steps:

Displaying, in step 410, a first GUI abstraction in a GUI. The first GUI abstraction presents a first collection of possible values for an input field. For example, the system may display the drop down list box 101 shown in Figures 1A and 1B. For example, the list box may present the first collection of possible values upon a user clicking the button 104.

Receiving, in step 420, user input indicating that the user wants to choose from another collection of possible values different from the first collection. The user input is made in a specific context. For example, the user input may be made with the control 120, the entry 122 or with the control 256. For example, the specific context is a setting specifying that the input field accepts entries containing more than one of the possible values. As another example, the context is a value type to which the possible values belong. As another example, the context is a characteristic of retrieving the collection of possible values for display.

Displaying, in step 430, a second GUI abstraction that presents the other collection of possible values. The second GUI abstraction is selected based on the specific context. For example, the second GUI abstraction may comprise the pane 300 including a tool selected based on the specific context.

Figure 5 is a flow chart of a method 500 according to one embodiment of the invention. For example, a computer program product can include instructions that cause a processor to perform the steps of the method 500. The method includes the following steps:

Displaying, in step 510, a drop down list box in a GUI, the drop down list box presenting a first collection of possible values for an input field.

Receiving, in step 520, user input indicating that the user wants to choose from another collection of possible values different from the first collection, the user input being made in a specific context.

Displaying, in step 530, a pane presenting the other collection of possible values, the pane including a tool for choosing from the other collection of possible values, the tool being selected based on the specific context.

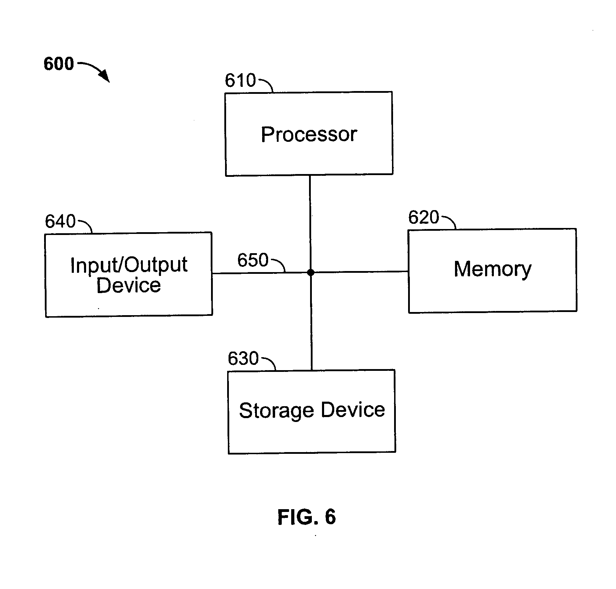

Figure 6 is a block diagram of a general computer system 600 that can be used in the operations described above, according to one embodiment. The system 600 includes a processor 610, a memory 620, a storage device 630 and an input/output device 640. Each of the components 610, 620, 630 and 640 are interconnected using a system bus 650. For example, any GUI abstraction shown or described herein can be generated on the input/output device 640.

The processor 610 is capable of processing instructions for execution within the system 600. In one embodiment, the processor 610 is a single-threaded processor. In another embodiment, the processor 610 is a multi-threaded processor. The processor 610 is capable of processing instructions stored in the memory 620 or on the storage device 630, including for receiving or sending information through the input/output device 640.

The memory 620 stores information within the system 600. In one embodiment, the memory 620 is a computer-readable medium. In one embodiment, the memory 620 is a volatile memory unit. In another embodiment, the memory 620 is a non-volatile memory unit.

The storage device 630 is capable of providing mass storage for the system 600. In one embodiment, the storage device 630 is a computer-readable medium. In various different embodiments, the storage device 630 may be a floppy disk device, a hard disk device, an optical disk device, or a tape device.

The input/output device 640 provides input/output operations for the system 600. In one embodiment, the input/output device 640 includes a keyboard and/or pointing device. In one embodiment, the input/output device 640 includes a display unit for displaying graphical user interfaces.

The invention can be implemented in digital electronic circuitry, or in computer hardware, firmware, software, or in combinations of them. Apparatus of the invention can be implemented in a computer program product tangibly embodied in an information carrier, e.g., in a machine-readable storage device or in a propagated signal, for execution by a programmable processor; and method steps of the invention can be performed by a programmable processor executing a program of instructions to perform functions of the invention by operating on input data and generating output. The invention can be implemented advantageously in one or more computer programs that are executable on a programmable system including at least one programmable processor coupled to receive data and instructions from, and to transmit data and instructions to, a data storage system, at least one input device, and at least one output device. A computer program is a set of instructions that can be used, directly or indirectly, in a computer to perform a certain activity or bring about a certain result. A computer program can be written in any form of programming language, including compiled or interpreted languages, and it can be deployed in any form, including as a stand-alone program or as a module, component, subroutine, or other unit suitable for use in a computing environment.

Suitable processors for the execution of a program of instructions include, by way of example, both general and special purpose microprocessors, and the sole processor or one of multiple processors of any kind of computer. Generally, a processor will receive instructions and data from a read-only memory or a random access memory or both. The essential elements of a computer are a processor for executing instructions and one or more memories for storing instructions and data. Generally, a computer will also include, or be operatively coupled to communicate with, one or more mass storage devices for storing data files; such devices include magnetic disks, such as internal hard disks and removable disks; magneto-optical disks; and optical disks. Storage devices suitable for tangibly embodying computer program instructions and data include all forms of non-volatile memory, including by way of example semiconductor memory devices, such as EPROM, EEPROM, and flash memory devices; magnetic disks such as internal hard disks and removable disks; magneto-optical disks; and CD-ROM and DVD-ROM disks. The processor and the memory can be supplemented by, or incorporated in, ASICs (application-specific integrated circuits).

To provide for interaction with a user, the invention can be implemented on a computer having a display device such as a CRT (cathode ray tube) or LCD (liquid crystal display) monitor for displaying information to the user and a keyboard and a pointing device such as a mouse or a trackball by which the user can provide input to the computer.

The invention can be implemented in a computer system that includes a back-end component, such as a data server, or that includes a middleware component, such as an application server or an Internet server, or that includes a front-end component, such as a client computer having a graphical user interface or an Internet browser, or any combination of them. The components of the system can be connected by any form or medium of digital data communication such as a communication network. Examples of communication networks include, e.g., a LAN, a WAN, and the computers and networks forming the Internet.

The computer system can include clients and servers. A client and server are generally remote from each other and typically interact through a network, such as the described one. The relationship of client and server arises by virtue of computer programs running on the respective computers and having a client-server relationship to each other.

A number of embodiments of the invention have been described. Nevertheless, it will be understood that various modifications may be made without departing from the spirit and scope of the invention. Accordingly, other embodiments are within the scope of the following claims.

## Claims

1. A method of aiding a user of a graphical user interface (GUI) in inputting a value, the method comprising:
displaying a first GUI abstraction in a GUI, the first GUI abstraction presenting a first collection of possible values for an input field;
receiving user input indicating that the user wants to choose from another collection of possible values different from the first collection, the user input being made in a specific context; and
displaying a second GUI abstraction presenting the other collection of possible values, the second GUI abstraction being selected based on the specific context.

2. The method of claim 1, wherein the first GUI abstraction is a drop-down list box, and/or
wherein the first GUI abstraction includes a user-created favorite entry for at least one of the possible values, and/or
wherein the first GUI abstraction includes a history entry for at least one of the possible values, and/or
wherein the first GUI abstraction includes a user-defined entry corresponding to choosing several of the possible values; and/or
wherein the first GUI abstraction includes a user-defined entry corresponding to a query to be performed on the possible values for the input field, wherein a query result is entered in the input field upon selecting the entry.

3. The method of claim 1 or 2, wherein the second GUI abstraction is a pane presenting the other collection of possible values for the user to choose from.

4. The method of anyone of claims 1 to 3, wherein the second GUI abstraction includes a tool for choosing from the other collection of possible values.

5. The method of claim 4, wherein the tool is selected based on the specific context.

6. The method of claim 4 or 5, wherein the input field can accept entries containing more than one of the possible values, and wherein the tool is a multiple-value selection tool.

7. The method of claim 6, wherein the specific context is a setting specifying that the input field accepts the entries containing more than one of the possible values.

8. The method of claim 6 or 7, wherein the multiple-value selection tool includes a tool area and a selection area.

9. The method of claim 8, wherein the user selects at least some of the possible values in the tool area, further comprising including the chosen possible values in the selection area.

10. The method of anyone of claims 4 to 9, wherein the second GUI abstraction includes a control for the user to choose between several tools, further comprising receiving an additional input indicating that the user chooses one of the several tools, further comprising displaying the selected tool in the second GUI abstraction.

11. The method of claim 10, further comprising providing an additional tool to the several tools, wherein the user can choose the additional tool using the control.

12. The method of anyone of claims 1 to 11, wherein the specific context is a value type to which the possible values belong.

13. The method of claim 12, further comprising including a tool in the second GUI abstraction for the user to choose between the other collection of possible values, the tool being selected based on the value type.

14. The method of claim 13, wherein the tool allows the user to search among the other collection of possible values.

15. The method of claim 13 or 14, wherein the value type includes dates and
wherein the tool is a calendar tool, and/or
wherein the value type is such that a range can be defined in the possible values, and wherein the tool is a range definition tool, and/or
wherein the value type is a hierarchy, and wherein the tool is a hierarchy selection tool.

16. The method of anyone of claims 1 to 15, wherein the specific context is a characteristic of retrieving the other collection of the possible values for display.

17. The method of claim 16, further comprising including a tool in the second GUI abstraction for the user to choose between the other collection of possible values, the tool being selected based on the characteristic.

18. The method of claim 16 or 17, wherein the second GUI abstraction displays all of the other collection of possible values if the characteristic is at least one selected from the group of: the other collection of possible values does not exceed a pre-selected maximum number, and the other collection of possible values can be retrieved for display within a pre-selected maximum time.

19. The method of anyone of claims 15 to 18, wherein the second GUI abstraction allows the user to search among the other collection of possible values if the characteristic is at least one selected from the group of: the other collection of possible values exceeds a pre-selected maximum number, and the other collection of possible values cannot be retrieved for display within a pre-selected maximum time.

20. The method of anyone of claims 1 to 19, wherein the other collection of possible values includes the first collection of possible values and at least another of the possible values.

21. The method of anyone of claims 1 to 20, wherein the first and second GUI abstractions are encapsulated in a GUI control.

22. A computer program product containing executable instructions that when executed cause a processor to perform operations comprising:
display a first GUI abstraction in a GUI, the first GUI abstraction presenting a first collection of possible values for an input field;
receive user input indicating that the user wants to choose from another collection of possible values different from the first collection, the user input being made in a specific context; and
display a second GUI abstraction presenting the other collection of possible values, the second GUI abstraction being selected based on the specific context.

23. A method of aiding a user of a graphical user interface (GUI) in inputting a value, the method comprising:
displaying a drop down list box in a GUI, the drop down list box presenting a first collection of possible values for an input field;
receiving user input indicating that the user wants to choose from another collection of possible values different from the first collection, the user input being made in a specific context; and
displaying a pane presenting the other collection of possible values, the pane including a tool for choosing from the other collection of possible values, the tool being selected based on the specific context.

24. The method of claim 23, wherein the input field can accept entries containing more than one of the possible values, and wherein the tool is a multiple-value selection tool.

25. The method of claim 24, wherein the specific context is a setting specifying that the input field accepts the entries containing more than one of the possible values.

26. The method of anyone of claims 23 to 25, wherein the specific context is a value type to which the possible values belong, and/or
wherein the specific context is a characteristic of retrieving the other collection of the possible values for display.

27. The method of anyone of claims 23 to 26, wherein the drop down list box and the pane are encapsulated in a GUI control.

28. A computer program product containing executable instructions that when executed cause a processor to perform operations comprising:
display a drop down box in a GUI, the drop down list box presenting a first collection of possible values for an input field;
receive user input indicating that the user wants to choose from another collection of possible values different from the first collection, the user input being made in a specific context; and
display a pane presenting the other collection of possible values, the pane including a tool for choosing from the other collection of possible values, the tool being selected based on the specific context.
